# EUROPEAN PATENT APPLICATION

(11) **EP 1 857 508 A2**
(43) Date of publication of application: **21.11.2007**
(21) Application number: 07008934.7
(22) Date of filing: 03.05.2007
(51) Int. Cl.: C09C 1/42

(54) **An improvement in high performance kaolin pigment, paper coating paint comprised of high performance kaolin pigment, in method for producing high performance kaolin pigment**

(30) Priority: 05.05.2006 BR PI0202268
(71) Applicant: Companhia Vale Do Rio Doce, 33030-970 Santa Luzia, Minas Gerais (BR)
(72) Inventor: Almeida Valadares, Maria Cristina, Belo Horizonte-Minas Gerais 30430-260 (BR); Duarte Neto, Joao, Belo Horizonte-Minas Gerais 30330-300 (BR)
(74) Representative: Hirsch & Associés

(57) **Abstract**

"An improvement in high performance kaolin pigment, paper coating paint comprised of high performance kaolin pigment in method for producing high performance kaolin pigment", wherein only coarse kaolin is used, said pigment exhibiting an ISO whiteness preferably higher than 88.5; a grain size distribution of at least 96% lower than 2 µm and at most 15% lower than 0.2 µm; a Hercules viscosity at 18 dines of at least 200 RPM in pulps with a concentration of solids of 70 -71 %, thus producing a coating paint that has an ISO whiteness higher than 88.5 and lower than 91.0; a grain size distribution of at least 96% lower than 2 µm and at most 15% lower than 0.2 µm and a Hercvules viscosity at 18 dines of at least 200 RPM in pulps with a solids concentration of 70 - 71 %, said manufacturing process providing an overall recovery of 49%.

## Description

The present application disclosed herein describes an improvement applied to a high performance kaolin pigment, a paper coating paint formed for a high performance kaolin pigment, as well as in a method for producing high performance kaolin pigment, more particularly kaolin products to be used in paper coatings and improvements applied to its method of production.

As is known by all those skilled in this art, kaolin has certain properties that it is possible to use same as a pigment, a filler and paper coating. At present, the paper industry is responsible for about 45% of the kaolin consumption all over the world.

As evidenced, patent application PI 0202268-0 is directed to a kaolin pigment that is simultaneously provided with improved optical and rheological properties that can be attained by means of a restrict control of the particle size and shape.

The kaolin pigment proposed in patent application PI 0202268-0 has the following characteristics: i) an ISO whiteness higher than 88.5; ii) a grain size distribution of at least 94% lower than 2 µm and at most 25% lower than 0,2 µm; iii) a Hercules viscosity at 1,100 RPM lower than 18 dines in pulps with a solids concentration of 70 - 75%.

The method disclosed in the above mentioned patent application involves the step of coarse kaolin beneficiation as well as the step of fine kaolin beneficiation.

In the beneficiation of coarse and fine kaolin, dispersion, the sand removal for removing the sand, centrifugation for discarding the coarse material and removing impurities through conventional processes such as magnetic separation, flotation and chemical leaching are provided; whereas in the beneficiation of coarse kaolin a fines fraction characterized by a narrow grain size distribution of at least 94% lower than 2 µm and at most 18% lower than 0,2 µm is attained in the centrifugation step; whereas in the beneficiation of fine kaolin a fines fraction characterized by a grain sized distribution of at least 90% lower than 2 µm and at most 50% lower than 0,2 µm is attained in the centrifugation step.

Still in patent application PI 0202268-0, in order to produce the pigment first of all it is required centrifuge the kaolin, with a 40% recovery, thus obtaining a product of 96 - 98% < 2 micra. The coarse waste is re-centrifuged, with a 20% recovery, thus reaching the same grain size as that of the first centrifugation. The two fine products are then put together and run along in the process, making it possible to get an overall recovery of 52%.

In spite of the fact that the techniques proposed in the patent application in question have been used satisfactorily, they exhibit certain difficulties such as, for example, the need to mix coarse kaolin with fine kaolin in order to obtain a high performance kaolin pigment.

Another relevant fact seen in the technology defined in PI 0202268-0 is that the fine kaolin used, also known as hard kaolin that is mined in Rio Capim, exhibits a lower production pace when compared with the coarse kaolin, and, therefore the overall productivity of the plant is considerably reduced.

However, in order to address such difficulties, new alternatives have been developed for the route that is referred to as traditional route herein below.

The object of said Continuation-in-Part is to make it possible to use the kaolin from the Rio Jari area as the fine kaolin in the mixture of the high performance kaolin pigment.

Another object of the Continuation-in-Part is to provide a method for the production of a kaolin pigment with improved optical and rheological characteristics with a better productivity.

In addition, another object of the Continuation-in-Part is to make it possible for the high performance kaolin pigment to be comprised only of coarse kaolin.

It is possible to obtain a high performance kaolin pigment by replacing the fine kaolin of Rio Capim with the fine kaolin of Rio Jari.

The fine kaolin from Rio Jari, besides making it possible to attain a productivity gain in the production of the kaolin pigment, also makes it possible to use a coarse kaolin ore of a lower whiteness, since the final whiteness of the fine kaolin of Rio Jari (ISO 88 - 89) is higher than that of the hard kaolin (ISO 84 - 85), increasing the utilization of the mine and reducing the working cost.

In order to keep the same characteristics, such as whiteness, viscosity, etc, both coarse and fine kaolins are fed, right after the evaporator, to the spray dryer at a ratio that ranges from 10 to 20%, preferably of 15%.

The method for producing high performance kaolin pigment that is proposed in the present Continuation-in-Part comprises the centrifugation of the kaolin, with a 70% recovery, thus attaining a product of 77 - 82% < 2 micra. The coarse waste is discarded and the fines are then re-centrifuged with a 70% recovery, thus attaining a product of 96 - 98% < micra. This process allows an overall recovery of 49%.

This new method that is proposed herein does not exhibit any advantage in the recovery, but in the productivity, since the machine flow rates are much higher when operating at higher recoveries.

The high performance kaolin pigment may be comprised only of coarse kaolin, that is composed of large particles in the shape of single plates, with a high degree of crystallization, usually with a Hinckley index higher than 0.6, and with a size distribution in the sand-free fraction of 55% to 75% lower than 2 µm and at most 50% lower than 0,2 µm.

In order to use coarse kaolin separately, it is necessary that the coarse fraction is discarded by using only the fine fraction, having a grain size distribution of at least 96% lower than 2 µm and at most 15% lower than 0.2 µm and an average shape factor of at most 15 in the fine end and at most 30 in the coarse end.

The characteristics of the pigment produced by using only coarse kaolin are as follows: i) an ISO whiteness higher than 88.5, that is, ranging from 88.5 to 91.0; ii) a grain sized distribution of at least 96% lower than 2 µm and at most 15% lower than 0.2 µm; and iii) a Hercules viscosity at 18 dines of at least 200 RPM in pulps with a solids concentration of 70 - 71 %.

As a consequence, the paper coating paint formed by the coarse high performance kaolin pigment presents: i) an ISO whiteness higher than 88.5 and lower than 91.0; ii) a grain size distribution of at least 96% lower than 2 µm and at most 15% lower than 0.2 µm; and iii) a Hercules viscosity at 18 dines of at least 200 RPM in pulps with a solid concentration of 70 - 71 %.

Although a preferred operation process has been described and illustrated herein, it should be recalled that changes can be made to this process without departing from the scope of present Continuation-in-Part of the invention.

## Claims

1. "An improvement in high performance kaolin pigment, paper coating paint comprised of high performance kaolin pigment in method for producing high performance kaolin pigment", according to claims of 1 the 8 of patent application PI 0202268-0, **characterized by** being comprised only of coarse kaolin, said coarse kaolin being composed of large particles in the shape of single plates, a high degree of crystallization, usually with a Hinckley index higher than 0.6, with a size distribution in the sand-free fraction of 55% to 75% lower than 2 µm and at most 15% lower than 0.2 µm.

2. "The improvement in high performance kaolin pigment" according to claim 1, **characterized in that** the coarse fraction of coarse kaolin is discarded by using only the fine fraction, and comprising a grain size distribution of at least 96% lower than 2 µm and at most 15% lower than 0.2 µm and an average shape factor of at most 15 in the fine end and of at most 30 in the coarse end.

3. "The improvement in high performance kaolin pigment" according to claim 1, **characterized in that** it has an ISO whiteness ranging from 88.5 to 91.0, preferably higher than 88.5; a grain size distribution of at least 96% lower than 2 µm and at most 15% lower than 0.2 µm; a Hercules viscosity at 18 dines of at the least 200 RPM in pulps with a solids concentration of 70 - 71 %.

4. "The improvement in high performance kaolin pigment" according to claim 7 of patent application PI 0202268-0, **characterized in that** the fine kaolin used in the pigment comes from the Rio Jari area.

5. "The improvement in paper coating paint comprising high performance kaolin pigment", according to claim 9 of patent application PI 0202268-0, **characterized in that** it has an ISO whiteness higher than 88.5 and lower than 91.0; a grain size distribution of at least 96% lower than 2 µm and at most 15% lower than 0.2 µm, and a Hercules viscosity at 18 dines of at least 200 RPM in pulps with a solids concentration of 70 - 71 %.

6. "The improvement in paper coating paint comprising high performance kaolin pigment", according to claims 10 and 11 of patent application PI 0202208-0, **characterized by** comprising the centrifugation of kaolin, with a 70% recovery, thus obtaining a product of 77 -82 % < 2 micra, discarding the coarse waste and re-centrifuging the fines, with a 70% recovery, thus producing a product of 96 - 98% < 2 micra, providing an overall recovery of 49%.
